# EUROPEAN PATENT SPECIFICATION

(11) **EP 0 416 002 B1**
(45) Date of publication and mention of the grant of the patent: **22.07.1998**
(21) Application number: 89906341.6
(22) Date of filing: 05.05.1989
(51) Int. Cl.: G01N 1/20

(54) **A METHOD IN THE OPERATION OF MIXING OR PROCESSING PLANTS, IN WHICH SAMPLES ARE TAKEN FROM VARIOUS SUPPLIES OF MATERIAL, AND SAMPLING MEANS FOR USE IN THAT CONNECTION**
VERFAHREN ZUR HANDHABUNG VON MISCHERN ODER REAKTOREN, BEI DEM DIE PROBEN AUS VERSCHIEDENEN QUELLEN ENTNOMMEN WERDEN UND PROBENENTNAHMEVORRICHTUNG FÜR DIESES VERFAHREN
PROCEDE D'EXPLOITATION D'INSTALLATIONS DE MELANGE OU DE TRAITEMENT, DANS LEQUEL DES ECHANTILLONS SONT PRELEVES DEPUIS DIVERSES SOURCES DE MATERIAU ET ORGANE DE PRELEVEMENT D'ECHANTILLONS DESTINE A ETRE UTILISE AVEC UN TEL PROCEDE

(30) Priority: 06.05.1988 DK 247088
(43) Date of publication of application: 13.03.1991
(73) Proprietor: SPROUT-MATADOR A/S, 6705 Esbjerg (DK)
(72) Inventor: JOHNSEN, Erik, Huus, Jerlev DK-7100 Vejle (DK)
(74) Representative: Skoett-Jensen, Knud
(86) International application number: DK8900107
(87) International publication number: WO8911089

(56) References cited:
- EP-A- 0 043 137
- WO-A-88/03269

## Description

The present invention relates to a method of taking out samples in mixing or processing plants in which measured amounts of materials are taken from various supplies such as silos and delivered to different areas of a receiving device such as a conveyor surface or a bin weigher, samples of the respective materials being taken from the individual supplies and carried to an analysing equipment with a view to rapid analysis and consequent possibly required adjustment of the dosing of one or more of the materials, e.g. in the production of food or fodder mixing portions.

In the production of portions of mixed fodder in industrial mixing plants comprising a largish silo battery for various material components it is utmost relevant that the quality of the materials is currently supervised, since such changes, e.g. of the contents of fat and protein, may occur that certain adjustments of the mixing recipes should be made. Up to now such a check has been predominantly made by taking out samples of the material charges from various suppliers for analysis and check of the supplier's own material specifications. Then, if it turns out that variations of the qualities occur during a long time, recipe changes which might possibly be required could be made at times the individual raw material, which is supplied to one or more silos, will be exhausted when the result of the analysis is available, as it takes some time to transfer the material sample to the analysing laboratory as well as to perform the analysis itself.

However quality changes may well be of such an order of magnitude between the individual charges of raw material that it would be reasonable as regards the customers to make required recipe changes already before or during the use of the individual charges. In this connection it is very helpful that a novel technique of analysis called NIR (Near Infrared Reflection), has been developed which enables a sample of a few grams of the material to be analysed in a few minutes, if only after a more time-consuming preparation of the sample as well as of the analysis equipment. Hereby the time of analysis can be reduced drastically and become so short that the result of the analyses can be available, before the mixture of raw materials in question is completely exhausted, or it may be contemplated to stop the operation of the plant till the result is available and possible corrections have been made. However, in practice it is difficult to accept periods of standstill due to the reduced efficiency of the plant caused thereby.

Detailed experiments have shown that the attainment of a standard quality of the material mixture or mixtures will depend on a still more representative analysis, as noticeable differences of quality of the materials may occur in different parts of the individual silos, typically resulting in changes occurring each quarter of an hour under intensive operation. Hence the ideal would be the application of sample taking devices at the individual silo outlets and provisions for rapid transfer of the taken samples to the analysis laboratory, from which the required recipe changes may be made so fast, possibly with computer aid, that in any case the main part of the succeeding mixture portions will be prepared with correct quality. However, at the silo outlets of a silo battery above a band or bin weighing machine the space is very narrow, so that a conventional sample taking is almost impossible. Automatic samplers have been developed, which could be mounted at the individual silo outlets, but the fetching of the samples taken out would still be very troublesome. The use of individual, integrated samplers are disclosed in WO88/03269.

The present invention, which in general is described in more detail in a simultaneously filed patent application, has established that it is feasible to use a rapid automatic transfer of samples to a NIR analysing unit from various sampling places, a particular purpose of the invention dealt with here being to provide a plant in which an automatic taking out of samples from a plurality of silo outlets can be made in a reasonably simple manner. Of course the ideal arrangement would be one in which a separate NIR analysing unit is provided in connection with each individual outlet, such an arrangement however, being economically unrealistic.

By the invention use of separate automatic sampling devices at each silo outlet is avoided by using a sample taking device which is movable relatively to said receiving device and is coupled or adapted to be coupled to a transport system for transferring successive samples to the analysis equipment, the sample taking device being successively moved along the receiving device for collecting samples from different areas of supply and transferring said samples to the transport system, all in accordance with claim 1.

Thus, by releasing the sampling device from a firm connection with each individual outlet or area of supply, samples from all of the outlets can true enough not be taken currently, but in practice this is not necessary and on the other hand operation with an automatic movable equipment enables a single sampling device of a high quality to serve a plurality of different outlets, whereby the overall arrangement may be relatively simple and cheap. In large silo plants, where perhaps 20-50 silos have outlets positioned in different locations above a receiving device arranged as a weighing device,
the outlets are usually controlled in such a manner that only one outlet is opened at a time, i.e. in order to make possible separate weighings of the individual materials. Hereby the sampler is enabled to work with a quite high capacity as it can be carried successively to the operative outlets. As mentioned below it is furthermore possible to optimise the operation of the sampler to a capacity which is adequately large in practice, even if no delay or waiting time for shifting of the sampler is introduced in connection with the switching between the outlets.

It is an essential circumstance that due to the mentioned narrow space it is difficult to work with built-in samplers in the individual silo outlets, as in any case it is difficult in existing plants to add samplers, which occupy additional space between the receiving device and the individual silos. However, according to general practice the silo outlets are placed above the receiving device substantially in the same horizontal plane, i.e. normally in a cover above a shielded band or bin weigher device, and since such a cover is already connected to an associated weighing device box through a flexible skirt, it will be possible to take out samples by means of a sampler, which in a simple manner is moved horizontally along the underside of the cover opposite to the space occupied by said skirt, through which the material can be discharged by virtue of a suitable slit of the skirt, so that the sampler may be installed without requiring any increased height of construction of the silo/weigher system.

The said outlets are normally not placed in a dead straight series above the receiving weighing device which is markedly long and considerably broader than the broadest outlet. It would be possible to use a sampling device which is moved in a system of co-ordinates, but according to the invention it is considerably simpler to use the system defined in claim 2, whereby the sampling device needs only be movable along the receiving weighing device. Two or more outlets may very well be placed side by side in the transverse direction of the receiving weighing device so that the sampler may be positioned under more than one outlet simultaneously which, however, is acceptable because material is normally not discharged through more than one outlet at a time.

By the features of claim 3 it is obtained that the sampler can be moved transversally across an operative outlet without receiving material therefrom which may be desirable with a view to optimalizing the operation of the sampler, because sample taking from certain outlets may be more important than sample taking from other outlets, and if little time is available for moving the sampler between two "important outlets", it may be of interest to permit the sampler to pass passively through an intermediate falling-down area.

The sampler may be permanently connected to the transport system which is to carry the sample portions to the analysis equipment which, however, can be rather complicated in practice. An advantageous alternative is defined in claim 4. Although certainly this arrangement requires additional time for moving the sampler from its connection with one of the said terminals after each sampling, the arrangement has proved advantageous for the attainment of a simple and reliable system for use under circumstances, e. g. in fodder mixing plants, where it is acceptable that the samplings take place more or less randomly, such that a certain idle time of the sampler can be tolerated.

Of course it will be possible by the same principles to use more than a single sampler, as e. g. two samplers can serve respective halves of the receiving weighing device or another corresponding receiving device, e. g. a conveyor belt.

As explained below and in accordance with claims 5 and 6 it is possible by means of a suitable computer equipment to establish an optimalized operation of the sampler paying regard to the many variables occurring during the working of the relevant plant. As to claim 6 it particularly applies that said control unit or computer will be able to establish an optimalized organization of the work of the sampler based on the coding of the various mixing recipes in such a way that said coding is not impeded by regard for the operation of the sampler.

The invention also comprises the sample taking device defined in claim 7 which is just applicable in the manner mentioned above. It is true that relatively large sample portions are taken as mentioned above which in itself favours the taking out of representative samples, but for the attainment of high accuracy it is still extremely important that the sample taking is correct for both the coarse and the fine materials, just because of the fact that the sampler is used in connection with several or may different materials. It is already known that samples of a flow of material can be taken by a transverse movement of an elongated container housing provided with an upwards facing slot formed between upright, upwards converging wall portions of the housing, but the present invention has established that such a sampler is not able to operate with the accuracy here desired. Many trials have been made with altered sampling principles, but it has surprisingly turned up that a very accurate sample taking, i.e. with an almost negligible effect of separation, is obtainable by a minor, but quite essential modification of the prior art technique, namely by the feature stated in claim 8. When the oblique position and mutual location of the slot forming walls are suitably adjusted with relation to the speed of movement of the sampler, the flow of material will be almost unaffected by the fact that the sampler is moved through it, so that no separation producing rebound of material on the wall faces of the slot occurs, and the sampling can take place as a progressive, keen cutting out of a partial zone of the material flow.

The invention shall be explained in more detail in the following with reference to the drawings, in which:
Fig. 1 is a schematic picture of a plant comprising a bin weigher and a sample taken system,
Fig. 2 is a perspective view of the bin weigher with a sampling equipment according to the invention,
Fig. 3 is a horizontal view thereof,
Fig. 4 is a perspective view of the sampler,
Fig. 5 is a partial lateral view of the bin weigher,
Fig. 6 is a top view of another type of bin weigher, and
Fig. 7 is a sectional view of the sampler in an operative condition.

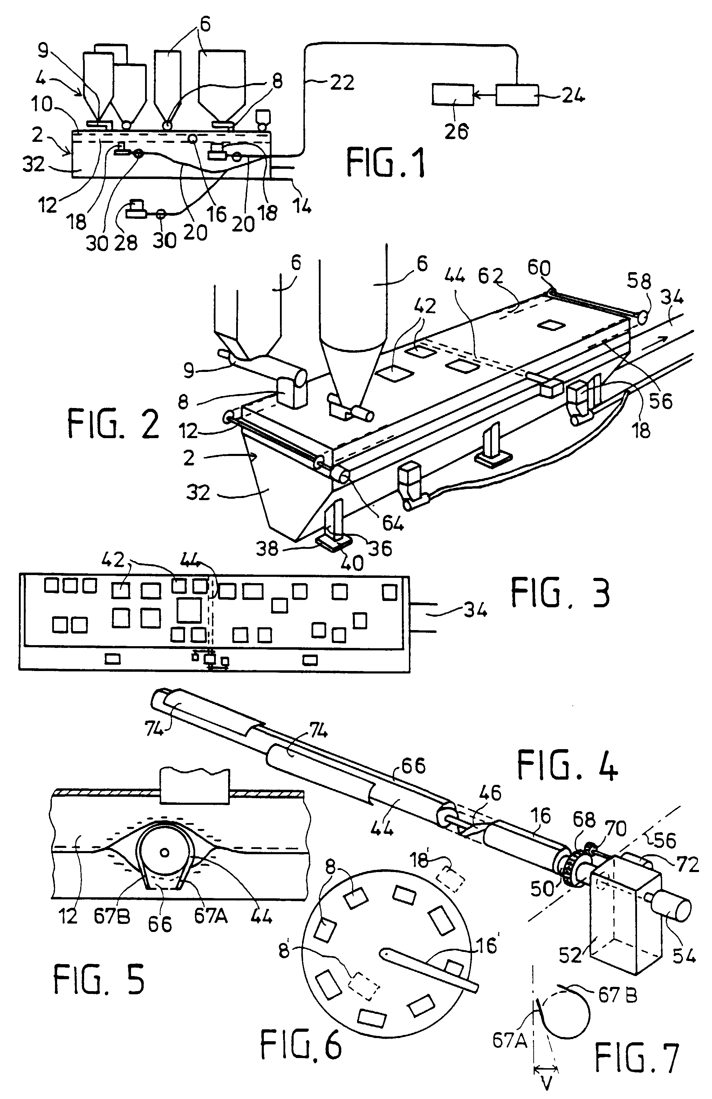

In Fig. 1 is shown a so-called bin weigher 2 with an overhead silo battery 4 comprising single silos 6 having bottom outlets 8 which are provided with suitable dosing means 9 for controlled discharge of the materials to the bin weigher 2. The outlets 8 are connected to respective openings in a cover lo placed above the bin weigher 2, a slack skirt 12 being mounted between said stationary cover and the upper edge of the bin weigher 2, which skirt seals the dustfilled bin weigher compartment without preventing the slight movability needed by the bin weigher for weighing out the desired portions of material supplied from the individual silos 6. When said portions are supplied one at a time, the supply can be stopped exactly when the weigher records the desired increase of weight of the material in question. After supply, preferably in a preprogrammed manner, of the desired material portions to the bin weigher a conveyor provided therein can be actuated to discharge all of the material through an outlet 14, from which the material portions are carried to a mixer system for mixing and delivery of the whole mixture portion. So far described the plant is quite conventional.

According to the invention a sample taker 16 is mounted in the area of the skirt 12, said sample taker or sampler extending transversally across the bin weigher and being movable in the longitudinal direction thereof. The sampler can be brought in delivery connection with a couple of sample collecting units 18, also named sample terminals, from which suction transport lines 20 extend to a common suction line 22 leading to an analysis laboratory or preferably an automatic analysing unit 24. This unit is operatively connected to a computer 26, by means of which current alterations of the recipes used for the composition of the individual mixtures can be made based on the analysis results.

As is shown the system may further comprise one or more separate sample terminals 28 which may be used in connection with manual discharge of samples or for receiving samples from system parts other than silos. In front of each sample terminal 18 or 28 a valve 30 is inserted in the suction line 20, which valves can be operated selectively for the transfer of single samples to the analysing unit 24 in a desired sequence, which may well be determined by the computer 26. This can be programmed to weight the importance of the individual samples to thereby all of the time select an optimalized sequence of the samples from all relevant criteria.

A substantially more detailed description of the plant in question is found in a copending patent application filed simultaneously with the present one.

The part of the plant to be considered more closely here is the area beneath the silo battery 4, in which area the sample taker 16 and associated sample receiving terminals 18 are situated. Said area is shown in more detail in Fig. 2.

The bin weigher 2 has in a conventional manner a weighing container 32, which is downwards tapering towards an internal out-feeding conveyor 34 which is stopped while dosing from the overhead silos 6 takes place. The weighing container is mounted on legs 36 resting on supports 38 through an intermediate weighing cell device 40. At the top the container is covered by a cover plate 10 which in a manner not shown is supported independently of and spaced above the weighing container, the free space between the container edge and the edge of the cover being bridged by a sealing curtain 12 for shielding the frequently very dusty container compartment. The cover 10 is provided with a number of passage openings 42 for the discharge pipes at the outlets 8 of the respective silos 6, said openings being typically positioned quite irregularly, e.g. as shown in Fig. 3.

The bin weigher is used in such a manner that for dosing of material portions for a desired mixture it is caused to receive the components from the relevant silos, the dosing means of which being operated one by one as long as required for the attainment of the desired weight of the components. Precisely the one-by-one successive operations of the outlets is the reason why only a single weighing unit, i.e. the bin weigher, is required. When all of the components of a given mixture portion have been weighed out, the conveyor 34 is started whereby the components are carried to a processing machinery not shown.

A fodder factory must be able to produce many diversified mixtures, and with a view to high versatility it may be necessary to have e.g. 20 - 30 silos available, even though materials from only a limited number of them may be required for the individual mixtures. In principle it is of no concern in which sequence the outlets from the individual silos are operated.

According to the invention use is made of a single or possibly a few sampling devices 16 which are movable and operating below the container cover 10 so that the samples can be taken from the falling flows of materials under the outlets, i.e. entirely without intervening in the frequently diversified outlet arrangements 8. The sampler is movable in the longitudinal direction of the bin weigher and extends out through a longitudinal slot in the sealing curtain 12, so that the samples can be delivered in a well defined area without said delivery being complicated by the fact that the silo outlets are placed in a complex irregular manner.

The preferred sampler consists of a worm pipe 44, Fig. 4, extending transversally of and above the container and enclosing a worm conveyor 46. The pipe 44 is provided with an upwards open, longitudinal slot 66 extending throughout the internal width of the container 32. However, in the embodiment shown in the drawing the right end of the pipe merges into a closed pipe member 50 which extends through a longitudinal slot in the sealing curtain 12 and further to a sample collecting container 52 placed outside of the container 32 and supporting a motor 54 for driving the worm 46. The sample container 52 is connected to a driving chain 56 extending along the weighing container 32 and running around sprockets 58, which through shafts are connected to opposite sprockets 60 between which a transport chain 62 is running inside the sealing curtain at the opposite side of the weighing container 32. Said chain 62 supports the free end of the worm pipe 44 so that motor controlled movement of one of the chains 56, 62 will cause a parallel displacement of the pipe 44 along the weighing container. A suitable driving motor for producing this movement is indicated at 64 in Fig. 2.

It will be understood that the worm pipe 44 with the upwards facing slot 66 can be controlled to move into any desired position below an actuated silo outlet 8 and furthermore to move across said outlet in such a manner that a representative sample of the down-flowing material is picked up through the slot 66, which sample will be carried out to be deposited in the container 52 no matter where the silo outlet in question is positioned in the transverse direction of the weighing container. The fact that more outlets may be positioned side by side could involve bringing together of sample materials from a plurality of outlets, but on account of the important fact that the material flow is controlled to take place singly, the sampler will receive material from only a single silo outlet at a time.

The sample container 52 is in a manner not shown in detail arranged to communicate with a sample terminal 18 after having been brought in position thereabove, i.e. so as to discharge the collected sample portion into the terminal. This can be effected by means of respective valve plates or swing flaps forming the bottom of the container 52 and, if necessary, the upper side of the terminal, and associated suitable operating means. As discussed below it may occur that the sample container in an empty condition is to pass a sample terminal 18, thus without automatic discharge having to take place at each passage of the terminals. By use of a suitable control equipment the sampler 16 can be moved to any relevant area of silo material flow and caused to take out the desired sample, optionally while moving more slowly through the stream of material than during the preceding positioning movement. The sample taking will automatically take place in an optimal manner, i.e. just by moving the sample receiving slot 66 right across the entire stream. Thereupon the sampler 16 can be moved, optionally with higher velocity, to a delivery position at the nearest sample terminal 18 to discharge the sample from the container 52, after which the sample is transmitted through the pneumatic transport system 20, 22 to the analysis unit. By means of the control equipment the sampler is then directed to the position where it is relevant to take out the next sample. It should be noted that the worm 46 and the sampler pipe 44 are made with such a high degree of precision that during the transport of the sample material the worm scrapes the pipe wall clean, so that there is no risk of any significant contamination of the samples by residuals of preceding samples.

Referring to Fig. 4, a gear 70 is mounted on the inlet pipe member 50 to the sample container 52, which gear meshes with a pinion 70 driven by a motor 72, the pipe 50 being rotatably connected to the container 52. Thus, by operation of the motor 72 the entire pipe 50, 44 can be rotated 180° into the position shown in Fig. 5 in which the slot 66 is directed downwards while the pipe is closed upwards.

Thus, in this position the pipe 44 will be inaccessible for down-flowing material which makes it possible to carry the sampler right through a falling-down area without taking any sample therefrom. An essential consequence of this shall be explained more detailed below, a direct consequence being the allowability of placing the sample terminals 18 no matter whether active silo outlets occur opposite the positions in question. When the pipe 44 is turned after a topical sample taking, the delivery of the sample to the terminal 18 in question can be carried out without risk of contamination, even though material simultaneously flows down from an outlet placed above the pipe, although of course without possibility of simultaneously taking a sample from said outlet.

The situation may occur that discharge from a plurality of outlets positioned side by side in the transverse direction of the container is brought about in rapid succession. By means of the turnable sampling pipe 44 it will be possible to take out a sample from one area without risk of supply of material from another area, i.e. when the pipe is turned immediately upon the sample taking.

Still the pipe 44 cannot be turned effectively until all of the previously taken sample has been carried to the container 52. Consequently it may well be desirable to shield the still upturned slot 66 against collection of further material, while the sampler passes an active flow-down area. As indicated in Fig. 4 this may be effected by providing in connection with the pipe 44 a shield plate 74 which by driving means not shown can be rotated about the pipe 44 between an overhead position shown at the left-hand end of the pipe in Fig. 4, in which the shield effectively prevents reception of falling material through the slot 66, and a turned out or otherwise displaced position shown at the middle of the pipe in Fig. 4, in which the shield plate is inoperative with respect to coverage of the slot 66.

The motor 54 is preferably reversible so that the worm 46 can be made to rotate with opposite direction of rotation as soon as a sample has been delivered to the container 52 and the pipe 44 has returned to a downward position of the slot 66, whereby possible residuals of the sample material is scraped off to fall down into the bin weigher before the next sample taking. This will not mean any noticeable contamination of the material in the weighing container 32, but will involve a most attractive cleaning of the sampling equipment for the attainment of a high accuracy of the analysis result for the next material sample.

In Fig. 5 is shown that the sealing curtain 12 may be so arranged that the sample receiving pipe can be moved longitudinally of the weighing container 32 without giving rise to any significant opening of the curtain, i.e. without the need of a permanently open slot therein.

Thus the sampler 16 replaces a larger number of stationary samplers and shows the additional advantage that it is immediately applicable also in case of rearrangements or addition of silo outlets, such steps requiring only adjustment of the equipment for controlling the movement and operation of the sampler.
Correspondingly the control equipment is of very great importance; a large plant will be dependent on a rather advanced control, which incidentally will also be necessary for a perfect function of the remainder of the described plant. As to the sampler it will be an essential point that it is controlled with a view to obtainment of the highest possible sampling capacity for which purpose only consideration of the necessary transaction time per analysed sample is needed. Two samples may well be taken in rapid succession when the samples are delivered to two different sample terminals 18, as in that case the transfer from the terminals can take place with the necessary time interval, possibly while the sampler is taking out the next sample.

Normally it will be a superior desire that the sample taking does not delay the successive material disharges for which reason it will be necessary to program the control such that the sample taking can be effected most efficiently paying regard to the occurring sequence of the discharges and the actual discharge times at the individual outlets. Under such circumstances the sampler may happen to pass through flow-down areas in which flow-down actually takes place, without the time permitting the sampler to take a sample therefrom; just in such cases it is of essential importance that it is possible to make the sampler inoperative by causing turning or coverage of the pipe 44, so that it will be held free of the material or materials passed on its way to the next actual sampling place.

A particular circumstance is implied by the fact that silo outlets which are randomly operated may occur, so that it is of extra importance to have a sample taken out when the opportunity occurs, even if this implies movement of the sampler from one end of the weighing container 32 to the other without possibility of taking samples from current streams of material which are passed on the way. Accordingly the control equipment should determine which outlets have preference over other outlets from which the chances of relatively frequent sample takings are better.

Even on account of the necessary transport of the sampler 16 to the actual sampling areas it is important that the control equipment has a memory for storing the sequence in which the various outlets should be operated in order to produce the various standard mixtures, as just the times of transport to the sampling places are essential for the attainment of a high sampling capacity. With the invention it has been found appropriate to use a particular control unit which is adapted to control the movement of the sampler 16 based on a registered sequence of operations of the various silo outlets 8, said sequence being decisive of whether the sampler is to be moved through a longer or shorter distance in order to be able to take a full sample at the next relevant sampling place. The sequence in question may or will be different for different mixtures, and the control unit may appropriately be arranged to memorize and identify the different sequences to the extent they are repeated so that a decisive control factor will be just the sequence in question. When a new sequence occurs at the coding of a new mixing program, this will be registered by the control unit which afterwards will be able to identify said program when it re-occurs, whereby optimum manner of motion of the sampler may be secured without the programmer having to pay special attention thereto at the coding of the various mixing recipes.

Fig. 6 illustrates the use of a circular receiving device wherein the inlets 8' are placed in a circle in a more or less regular manner which is well known in the food industry, and wherein the inlets communicate with e.g. an underneath round bin weigher. For use in connection with this arrangement the invention proposes a sample taker 16' which is rotatable about the center of said circle to thereby selectively serve the different inlets 8'. An associated sample terminal is designated 18'; it is shown that inlets 8' may be provided, which are positioned outside (inside) the regular circle of inlets 8'. If on the other hand all of the inlets 8' are positioned along a circular zone, the active sample receiving opening of the sampler 16' needs only to extend over a corresponding short length of the rotatable system. The width of the slot 66 should in this case be inwards decreasing.

It will be understood that the particular sample terminal 18' can be dispensed with, if the sampler 16' is adapted to carry the material samples inwards towards the center for delivery to a sample terminal in permanent connection with the rotatable system.

As shown in Figs. 5 and 7 the slot 66 of the sample taking pipe 44 is formed between protruding wall portions 67A and 67B which are slightly outwards converging. This form of a sample taking slot in a transversly moved sample taker is not new in itself, and it has previously been suggested to move such a sample taker right through a stream of material with the slot 66 facing straight upwards. However, the accuracy obtainable hereby has not been all to good, and the present invention has established that a much better accuracy can be obtained by the simple measure of moving the sample taker with the slot 66 pointing a little forwards in the direction of movement as shown in Fig. 7.

Hereby it is a decisive condition that the front wall 67A does not slope upwards and backwards relatively to the direction of movement but stands vertically or even as shown is oppositely sloping. The explanation of the increased accuracy of the sample taking is the fact that the down-flowing material does not hit the outer side of the wall 67A which could give rise to separation as regards samples. In consideration of the occurring own movement of the sampler it is for the same reason advantageous that the wall 67A slopes slightly forwards forming an angle V with the vertical. The optimum size of this angle depends on the velocity of the sampler and the speed of falling of the material at the sampling place. As an example the angle should be 13° at a height of fall of the material of 15 - 20 cm and a velocity of movement of the sampler of 0,4 m/sec.

Ideally the rear wall 67B should take up a corresponding oblique position, but it has proved acceptable that it slopes slightly more, as shown. With this arrangement the entrance area will almost cut its way through the material stream without causing any substantial disturbance therein; just because of the upstanding rear wall the width of the slot needs not be larger than the maximum dimension of the material particles, e.g. 40 mm. It is essential that large particles are not rejected as this would imply separation. Also for this reason it is advantageous that in connection with the invention samples with a relatively large volume are taken.

It should be mentioned that the use of the inclined slot in the sampler would be advantageous also in connection with conventional samplers.

## Claims

1. A method of taking out samples of materials in mixing or processing plants, e.g. in fodder mixing plants, in which such materials are dosed out from different material supplies (6) such as silos for delivery as falling flows of respective materials at different area portions of a receiving face such as a conveyor face or a band or bin weigher (42), whereby samples are collected from the falling material flows at the individual delivery areas and carried to an analysing station (24), characterized in that for the taking of the samples at several places at least one sampler device (44) is moved between different ones of the falling material flows and is caused to deliver the consecutively taken samples to a transport system (22), in which the samples are automatically transferred to the analysing station (24).

2. A method according to claim 1, characterized in that in case of an oblong receiving face (Fig. 2) a sample taking device (44) is used which extends all over the width of the receiving face and in its entirety is moveable along the length of the receiving face, whereas in case of a round receiving face (Fig. 6) a sample taking device (161) is used which extends radially relative to the receiving face and in its entirety is rotatable along the latter.

3. A method according to claim 1 or 2, characterized by the use of a sample taking device, (44) which is provided with a collecting container (44) for receiving the samples singly, and further by the use of a single or a few stationary transport system connecting terminals (18), said sample taker (44) being controlled after each sample taking to move to a connecting position at such a terminal (18).

4. A method according to claim 3, characterized in that the sample taker (44) is controlled in such a manner paying regard to the sequence in which the materials are dosed out to the various areas of the receiving face, that the capacity of the sample taker is utilized optimally.

5. A method according to claim 4, in which the dosing from the various supplies (6,8) with respect to amount and sequence is controlled by a control unit on the basis of programmed recipes, characterized in that the sample taker (44) is controlled in an optimalized manner by a separate control unit which is adapted to register the dosing sequence at the individual recipes and to thereafter perform the control of the sample taker on the basis of recognition of the already registered sequences.

6. A mixing or processing plant comprising means (8) for dosing out materials from various material supplies such as silos (6) for delivery of falling flows of the respective materials at different sub areas of a receiving face such as a conveyor face or a band or bin weigher (2) and comprising means (44) for taking out samples from the different falling material flows preparatory to the samples being carried to an analysing station (24), characterized in that the sample taking means are arranged as at least one sampler device (44), which is moveably mounted in such a manner that it is shiftable between positions underneath several different places of material supply in order to collect samples from the respective falling flows of material, and that the sampler device or devices (44) are operatively connected or connectable with a transportation system (22) for consecutively transporting the collected samples to said analysing station (24).

7. A plant according to claim 6, characterized in that the sampler device (44,161) is displaceable as a whole in one direction, while perpendicularly thereto the device is of a dimension enabling it to cooperate with material flows from supplies located mutually spaced in that direction.

8. A plant according to claim 6 or 7, characterized in that the sampler device (44) is of an oblong shape and is provided with controllable means (74) for effectively covering or deactivating the device all over its length or selectively over partial lengths thereof.

9. A plant according to claim 6, 7 or 8 characterized in that the sampler device (44) is adapted to collect single samples and to deliver the samples consecutively to said transport system (22).

10. A plant according to claim 9, in which the sampler device (44) is permanently connected with the transport system (22).

11. A plant according to claim 9, in which there is arranged, in the moving path of the sampler device (44), one or more transport system connecting terminals (18), to which the sampler device (44) is operatively connectable for delivery of consecutive samples.

12. A plant according to claim 8, in which the sampler device is an oblong, generally U-profiled tube (44), in which means (46) are provided for conveying sample material to an end of the tube, said covering means being constituted by an oblong cover plate (74), which is displaceable between an active position above the tube (44) and a passive position out of the upwards facing profile opening (66) of the tube (44), while said deactivating means comprise means for turning the tube (44) upside down.

13. A plant according to claim 12, in which the upwardly facing profile opening (66) as defined by opposed, substantially parallel or slightly converging wall portions (67A,B) is oriented so as to be slightly tilted forwardy in the direction of a sample taking movement of the tube (44).

14. A plant according to claim 8 and comprising a bin weigher (2), above which there is a cover plate (10) with openings connected with the outlets (8) of respective overlying silos (6), a connector skirt (12) being provided between the cover plate (10) and the upper edge of the bin weigher, characterized in that the sampler device (44) is arranged for movement in a plane just above the top edge of the bin weigher (2), projecting through a self-closing slot in the connector skirt (12).

## Patentansprüche

1. Ein Verfahren zur Entnahme von Materialproben in Misch- oder Verfahrensanlagen, z.B. in Futtermischanlagen, in denen solche Materialien aus verschiedenen Materialzufuhrquellen (6) wie Silos zum Liefern abdosiert werden als fallende Ströme der jeweiligen Materialien an verschiedenen Bereichsabschnitten einer Aufnahmefläche wie einer Förderfläche oder einer Band- oder Behälterwaage (2), wobei Proben von den fallenden Materialströmen an den einzelnen Lieferbereichen gesammelt und zu einer Analysestation (24) gebracht werden, **dadurch gekennzeichnet,** daß zur Entnahme der Proben an verschiedenen Stellen wenigstens eine Probennehmereinrichtung (44) zwischen verschiedenen der fallenden Materialströme bewegt wird und veranlaßt wird, die nacheinander entnommenen Proben zu einem Transportsystem (22) zu bringen, in dem die Proben automatisch zu der Analysestation (24) transferiert werden.

2. Ein Verfahren nach Anspruch 2, **dadurch gekennzeichnet,** daß im Falle einer länglichen Aufnahmefläche (Fig. 2) eine Probennehmereinrichtung (44) verwendet wird, die sich über die gesamte Breite der_Aufnahmefläche erstreckt und in ihrer Gesamtheit entlang der Länge der Aufnahmefläche bewegbar ist, wohingegen im Falle einer runden Aufnahmefläche (Fig. 6) eine Probennehmereinrichtung (161) eine Probennehmereinrichtung verwendet wird, die sich radial relativ zur der Aufnahmefläche erstreckt und in ihrer Gesamtheit entlang letzterer drehbar ist.

3. Ein Verfahren nach Anspruch 1 oder 2, **gekennzeichnet** durch die Verwendung einer Probennehmereinrichtung (44), die mit einem Sammelbehälter (44) zur einzelnen Aufnahme der Proben versehen ist, und weiterhin durch die Verwendung eines einzelnen oder einiger stationärer Transportsystemverbindungsterminals (18), wobei der Probennehmer (44) nach jedem Probennehmen gesteuert wird, sich zu einer Verbindungsposition an einem solchen Terminal (18) zu bewegen.

4. Ein Verfahren nach Anspruch 3, **dadurch gekennzeichnet,** daß der Probennehmer (44) unter Beachtung der Reihenfolge, in der die Materialien an die verschiedenen Bereiche der Aufnahmefläche abdosiert werden, derart gesteuert wird, daß die Kapazität des Probennehmers optimal ausgenutzt wird.

5. Ein Verfahren nach Anspruch 4, bei dem das Dosieren aus den verschiedenen Zufuhrquellen (6, 8) in Bezug auf Menge und Reihenfolge von einer Steuereinheit auf der Grundlage programmierter Formulierungen gesteuert wird, **dadurch gekennzeichnet,** daß der Probennehmer (44) in einer optimierten Weise von einer separaten Steuereinheit gesteuert wird, die daran angepaßt ist, die Dosierreihenfolge in den einzelnen Formulierungen aufzunehmen und danach die Steuerung des Probennehmers auf der Grundlage von Wiedererkennung der bereits aufgenommenen Folgen durchzuführen.

6. Eine Misch- oder Verfahrensanlage, umfassend Mittel (8) zum Abdosieren von Materialien aus verschiedenen Materialzufuhrquellen wie Silos (6) zum Liefern fallender Ströme der jeweiligen Materialien an verschiedenen Unterbereichen einer Aufnahmefläche wie einer Förderfläche oder einer Band- oder Behälterwaage (2), und umfassend Mittel (44) zum Herausnehmen von Proben aus den verschiedenen fallenden Materialströmen, in Vorbereitung, daß die Proben zu einer Analysestation (24) gebracht werden, **dadurch gekennzeichnet,** daß die Probennehmermittel als wenigstens eine Probennehmereinrichtung (44) angeordnet sind, die derart bewegbar angebracht ist, daß sie zwischen Positionen unterhalb verschiedener Stellen der Materialzufuhr verschiebbar ist, um Proben von den jeweiligen fallenden Materialströmen zu sammeln, und dadurch daß die Probennehmereinrichtung oder -einrichtungen (44) operativ mit einem Transportsystem (22) verbunden oder verbindbar sind, um die gesammelten Proben nacheinander zu der Analysestation (24) zu transportieren.

7. Eine Anlage nach Anspruch 6, **dadurch gekennzeichnet,** daß die Probennehmereinrichtung (44, 161) als ganzes in einer Richtung verschiebbar ist, während die Einrichtung senkrecht von einer Dimension ist, die es ihr ermöglicht, mit Materialströmen von Zufuhrquellen, die in der Richtung wechselweise beabstandet angeordnet sind, zusammenzuwirken.

8. Eine Anlage nach Anspruch 6 oder 7, **dadurch gekennzeichnet,** daß die Probennehmereinrichtung (44) von länglicher Form und mit Steuermitteln (74) versehen ist, um die Einrichtung über ihre gesamte Länge oder selektiv über Teillängen derselben effektiv abzudecken oder zu deaktivieren.

9. Eine Anlage nach Anspruch 6, 7 oder 8, **dadurch gekennzeichnet,** daß die Probennehmereinrichtung (44) angepaßt ist, einzelne Proben zu sammeln und die Proben nacheinander an das Transportsystem (22) zu liefern.

10. Eine Anlage nach Anspruch 9, bei der die Probennehmereinrichtung (44) ständig mit dem Transportsystem (22) verbunden ist.

11. Eine Anlage nach Anspruch 9, bei der im Bewegungsweg der Probennehmereinrichtung (44) ein oder mehrere Transportsystemverbindungsterminals (18) angeordnet sind, mit denen die Probennehmereinrichtung (44) zum Liefern aufeinanderfolgender Proben operativ verbindbar ist.

12. Eine Anlage nach Anspruch 8, bei der die Probennehmereinrichtung ein längliches Rohr (44) von im allgemeinen U-förmigem Profil ist, in dem Mittel (46) vorgesehen sind, um das Probenmaterial an ein Ende des Rohres zu fördern, wobei die Abdeckungsmittel von einer länglichen Abdeckplatte (74) gebildet sind, die zwischen einer aktiven Position über dem Rohr (44) und einer passiven Position aus der nach oben gerichteten Profilöffnung (66) des Rohres (44) verschiebbar ist, während die Deaktivierungsmittel Mittel zum Umdrehen des Rohres (44) umfassen.

13. Eine Anlage nach Anspruch 12, bei der die nach oben gerichtete Profilöffnung (66), wie sie durch einander gegenüberliegende im wesentlichen parallele oder leicht konvergierende Wandabschnitte (67A, B) definiert ist, ausgerichtet ist, damit sie leicht nach vorn in der Richtung einer Probenentnahmebewegung des Rohres (44) geneigt ist.

14. Eine Anlage nach Anspruch 8 und umfassend eine Behälterwaage (2), über der sich eine Abdeckplatte (10) befindet mit mit den Auslässen (8) der jeweiligen darüberliegenden Silos (6) verbundenen Öffnungen, wobei eine Verbindungsschürze (12) zwischen der Abdeckplatte (10) und dem oberen Rand der Behälterwaage (2) vorgesehen ist, **dadurch gekennzeichnet,** daß die Probennehmereinrichtung (44), durch einen selbstschließenden Schlitz in der Verbindungsschürze (23) hervorragend, zur Bewegung in einer Ebene gerade über dem oberen Rand der Behälterwaage (2) angeordnet ist.

## Revendications

1. Procédé pour prélever des échantillons de matières dans des installations de mélange ou de traitement, par exemple dans des installations de mélange de fourrage, dans lesquelles de telles matières sont dosées à partir de différents dispositifs d'alimentation (6) de matières, tels que des silos pour distribuer par gravité des flux de matières respectives en différentes parties de zones d'une face de réception telle qu'une face de transporteur ou une bande ou un dispositif de pesage à réceptacle (2), les échantillons étant recueillis à partir des flux de matières qui tombent aux zones de distribution individuelles et transportés vers un poste d'analyse (24),
caractérisé en ce que pour le prélèvement des échantillons en plusieurs emplacements, au moins un dispositif échantillonneur (44) est déplacé entre différents flux de matières qui tombent et est entraîné à distribuer les échantillons prélevés consécutivement à un système de transport (22), dans lequel les échantillons sont automatiquement transférés vers le poste d'analyse (24).

2. Procédé selon la revendication 1,
caractérisé en ce que dans le cas d'une face de réception oblongue (figure 2), un dispositif de prélèvement d'échantillons (44) est utilisé qui s'étend sur toute la largeur de la face de réception et dans sa totalité est déplaçable le long de la longueur de la face de réception, tandis que dans le cas d'une face de réception ronde (figure 6), un dispositif de prélèvement d'échantillons (161) est utilisé qui s'étend radialement par rapport à la face de réception et dans sa totalité peut tourner autour de cette dernière.

3. Procédé selon la revendication 1 ou 2,
caractérisé par l'utilisation d'un dispositif de prélèvement d'échantillons (44) qui est muni d'un conteneur de collecte (44) pour recevoir les échantillons séparément, et de plus par l'utilisation d'un ou de quelques boîtiers fixes (18) reliés à un système de transport, ledit dispositif de prélèvement d'échantillons (44) étant commandé après chaque prélèvement d'échantillons pour se déplacer vers une position de liaison à un tel boîtier (18).

4. Procédé selon la revendication 3,
caractérisé en ce que le dispositif de prélèvement d'échantillons (44) est commandé en faisant attention à la séquence dans laquelle les matières sont dosées vers les différentes zones de la face de réception, pour que la capacité du dispositif de prélèvement d'échantillons soit utilisée de façon optimale.

5. Procédé selon la revendication 4, dans lequel le dosage à partir des différents dispositifs d'alimentation (6,8) par rapport à la quantité et à la séquence est commandé par une unité de commande sur la base de données programmées,
caractérisé en ce que le dispositif de prélèvement d'échantillons (44) est commandé d'une manière optimisée par une unité de commande séparée qui est adaptée pour enregistrer la séquence de dosage au niveau des données individuelles et, par la suite, à réaliser la commande du dispositif de prélèvement d'échantillons sur la base de la reconnaissance des séquences déjà enregistrées.

6. Installation de mélange ou de traitement comprenant des moyens (8) pour doser des matières à partir de différents dispositifs d'alimentation de matières tels que des silos (6) pour distribuer des flux tombant des matières respectives en différentes zones d'une face de réception telle qu'une face de transporteur ou une bande ou un dispositif de pesage à réceptacle (2) et comprenant des moyens (44) pour prélever des échantillons à partir des différents flux de matières qui tombent préalablement aux échantillons qui sont transportés vers un poste d'analyse (24),
caractérisée en ce que les moyens de prélèvement d'échantillons sont agencés comme au moins un dispositif d'échantillonnage (44),qui est monté, de façon mobile, de telle façon qu'il soit déplaçable entre des positions au-dessous de plusieurs emplacements différents d'alimentation de matières afin de recueillir des échantillons à partir des flux respectifs de matières, et en ce que le dispositif ou les dispositifs d'échantillonnage (44) sont reliés ou peuvent être reliés de façon opérationnelle à un système de transport (22) pour transporter de façon consécutive les échantillons recueillis vers ledit poste d'analyse (24).

7. Installation selon la revendication 6,
caractérisée en ce que le dispositif d'échantillonnage (44,161) est déplaçable dans sa totalité dans une direction, tandis que perpendiculairement à celle-ci, le dispositif est d'une dimension lui permettant de coopérer avec des flux de matières à partir de dispositifs d'alimentation situés, de façon mutuellement espacée, dans cette direction.

8. Installation selon la revendication 6 ou 7,
caractérisée en ce que le dispositif d'échantillonnage (44) est d'une forme oblongue et est muni de moyens de commande (74) pour recouvrir et désactiver efficacement le dispositif sur toute sa longueur ou sélectivement sur des longueurs partielles de celui-ci.

9. Installation selon la revendication 6, 7 ou 8,
caractérisée en ce que le dispositif d'échantillonnage (44) est adapté pour recueillir des échantillons individuels et pour distribuer les échantillons consécutivement audit système de transport (22).

10. Installation selon la revendication 9,
dans laquelle le dispositif d'échantillonnage (44) est relié, de façon permanente, au système de transport (22).

11. Installation selon la revendication 9,
dans laquelle il est agencé, dans la voie de déplacement du dispositif d'échantillonnage (44), un ou plusieurs boîtiers (18) reliés à un système de transport, auxquels le dispositif d'échantillonnage (44) peut être relié de façon opérationnelle pour distribuer des échantillons consécutifs.

12. Installation selon la revendication 8,
dans laquelle le dispositif d'échantillonnage est un tube oblong, généralement à profil en U (44) dans lequel des moyens (46) sont prévus pour transporter une matière d'échantillons vers une extrémité du tube, lesdits moyens de recouvrement étant constitués par une plaque de couverture oblongue (74), qui est déplaçable entre une position active au-dessus du tube (44) et une position passive hors de l'ouverture profilée faisant face vers le haut (66) du tube (44), tandis que lesdits moyens de désactivation comprennent des moyens pour tourner le tube (44) en le renversant.

13. Installation selon la revendication 12,
dans laquelle l'ouverture profilée faisant face vers le haut (66), comme il est défini par des parties de paroi (67A,B) opposées sensiblement parallèles ou légèrement convergentes, est orientée de façon à être légèrement inclinée vers l'avant dans la direction d'un mouvement de prélèvement d'échantillons du tube (44).

14. Installation selon la revendication 8 et comprenant un dispositif de pesage à réceptacle (2), au-dessus duquel se trouve une plaque de recouvrement (10) ayant des ouvertures reliées à des sorties (8) de silos respectifs (6) sus-jacents, une jupe de liaison (12) étant prévue entre la plaque de recouvrement (10) et le bord supérieur du dispositif de pesage à réceptacle,
caractérisée en ce que le dispositif d'échantillonnage (44) est agencé pour se déplacer dans un plan juste au-dessus du bord supérieur du dispositif de pesage à réceptacle (2), faisant saillie à travers une fente à fermeture automatique dans la jupe de liaison (12).
